# EUROPEAN PATENT APPLICATION

(11) **EP 4 464 729 A1**
(43) Date of publication of application: **20.11.2024**
(21) Application number: 23174072.1
(22) Date of filing: 17.05.2023
(51) Int. Cl.: C08G 18/08, C08G 18/12, C08G 18/38, C08G 18/48, C08G 18/75, C09D 175/08

(54) **POLYURETHANE DISPERSION WITH KETONE FUNCTIONALITY**

(71) Applicant: Sika Technology AG, 6340 Baar (CH)
(72) Inventor: BARRATT, John, Preston, PR1 0EH (GB); BYRNE, Michael, Lytham, FY8 4TF (GB); GRIMSHAW, Georgina, Preston, PR5 6XG (GB); ROUND, Michelle, Leyland, PR25 3YB (GB)
(74) Representative: Sika Patent Attorneys

(57) **Abstract**

The subject of the invention is a waterbased anionic polyurethane dispersion with incorporated ketone groups of the formula (I), suitable for the use in a waterbased self-crosslinking composition in combination with a polyhydrazide crosslinker. The inventive polyurethane dispersion is easy to prepare and allows one-component coating compositions of low toxicity and low emission, with good storage stability, good curing properties at ambient conditions, high hardness, high scratch resistance, a low dirt pick-up and a good water resistance, particularly suitable for the sealing of floors or as topcoat in a floor coating system.

## Description

### Technical field

Self-crosslinkable polyurethane dispersion with ketone functionality for coating, sealant and adhesive applications.

### Background of the invention

There is a growing interest in waterbased polyurethane coating systems due to increasing regulations in terms of health hazards and emission of volatile organic compounds. However, there is still a gap in the performance between two-component solvent based coatings and one-component waterbased systems, particularly in terms of durability against harsh physical and environmental conditions.

Many attempts were made to build a self-crosslinking mechanism into the curing process of a waterbased polyurethane dispersion, one of them using a polyurethane disperson with incorporated ketone groups in combination with a dihydrazide crosslinker. However, there is still a need for improving the preparation and performance of such self-crosslinking systems.

WO 2004/111103 teaches the use of 3-acetyl-1-propanol for the incorporation of ketone functionalities into a polyurethane dispersion. A main disadvantage of this method is the reduced molecular weight of the obtained polyurethane polymer caused by the incorporation of this monohydroxy building block.

US 4,983,662 teaches the use of a building block from diethanol amine and diacetone acrylamide for the incorporation of ketone functionalities into a polyurethane dispersion. Unfortunately, the addition of diethanol amine to the acrylic double bond is difficult to perform in high yield and the self-crosslinking with a dihydrazide crosslinker performs unsatisfactory.

US 7,476,705 teaches the use of a building block from the reaction of a diepoxide with levulinic acid for the incorporation of ketone functionalities into a polyurethane dispersion. The preparation of such a building block needs harsh reaction conditions and the obtained highly viscous building block makes it difficult to obtain a high-quality polyurethane dispersion with good storage stability.

### Summary of the invention

The task of the invention is to provide a polyurethane dispersion with incorporated ketone groups which is easy to prepare and allows self-crosslinking compositions of improved performance.

This task is surprisingly achieved with the waterbased anionic polyurethane dispersion as described in claim 1. The inventive dispersion is obtained from an easy process using a building block from the reaction of at least one mercapto group-containing diol and at least one ketone of the formula (II), whereby surprisingly this building block is readily accessible at mild reaction conditions in high yield, even allowing an in situ preparation during the preparation of the polyurethane dispersion without the need of a pre-reaction. This is highly beneficial in terms of process handling and regulatory requirements.

The inventive polyurethane dispersion is particularly suitable for the use in a waterbased self-crosslinking composition containing a polyhydrazide crosslinker. Such a composition shows a good storage stability and allows a particularly high hardness in terms of pendulum hardness and Young's modulus, an improved scratch resistance, improved wet abrasion properties, low dirt pick-up and good water resistance.

The self-crosslinking composition is particularly suitable for the use as one component coating composition at ambient conditions, particularly for the sealing of floors or as a topcoat in a floor coating system, allowing easy to apply high quality coatings of low toxicity and low emission.

Other aspects of the invention are described in other independent claims. Preferred aspects of the invention are described in dependent claims.

### Detailed description of the invention

The subject of the invention is a waterbased anionic polyurethane dispersion with incorporated ketone groups of the formula (I), 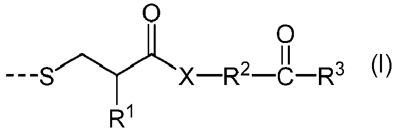 wherein
R¹ is H or methyl,
R² is a divalent C₄ to C₇ alkylene group,
R³ is a C₁ to C₄ alkyl, and
X is O, S or NR⁴ with R⁴ = H or C₁ to C₆ alkyl.

The term "waterbased" refers to a composition which contains the main polymer as a dispersion or emulsion in water and which contains a significant amount of water, typically more than 20 weight-% in relation to the total waterbased composition. The term "polyurethane dispersion" refers to a polyurethane polymer that forms a storage stable dispersion in water.

The term "polyurethane polymer" includes all polymers prepared by the so-called diisocyanate polyaddition process. Besides urethane groups they can also contain other groups, particularly urea groups.

A dashed line in the formulas in this document represents the bond between a substituent and the associated residue of the molecule.

The term "volatile" in this document includes all substances with a boiling point at atmospheric pressure below 250 °C.

In this document, substance names beginning with "poly" such as polyisocyanate or polyhydrazide, refer to substances containing two or more of the functional groups in their name.

The term "storage stable" refers to the ability of a composition to be stored at room temperature in a suitable water-tight container for a certain time interval, in particular several months, without undergoing significant changes in application or end-use properties.

The term "one-component" describes a composition of which all ingredients are stored in a single container with good storage stability and which can be applied and cured without the addition of further reactive ingredients.

R¹ is preferably H.

R² is preferably 2-methyl-2,3-propanediyl, particularly such that the tertiary carbon is bound to X.

R³ is preferably a C₁ to C₄ alkyl, most preferably methyl.

X is preferably NR⁴.

R⁴ is preferably H, which means X is preferably NH.

Most preferably, R¹ is H, R² is 2-methyl-2,3-propanediyl, R³ is methyl and X is NH. Such a ketone group of the formula (I) is preferably obtained from the addition of a mercaptane to the double bond of diacetone acrylamide (DAAM, N-(1,1-dimethyl-3-oxobutyl)acrylamide)).

Preferably, the content of ketone groups in the polyurethane dispersion is 0.05 to 2 mmol/g, preferably 0.1 to 1 mmol/g, more preferably 0.1 to 0.5 mmol/g, based on the total solids content of the dispersion. Such a content allows self-crosslinking compositions of good storage stability and high performance.

The polyurethane dispersion is an anionic dispersion. This means that the dispersion contains incorporated anionic groups, which allow good dispersing properties and a stable dispersion.

Preferred anionic groups are deprotonated carboxy groups.

Particularly preferred anionic groups are derived from neutralized 2,2-bis(hydroxymethyl)propionic acid or 2,2-bis(hydroxymethyl)butanoic acid. Such a dispersion has an excellent storage stability.

Preferably, the content of anionic groups in the polyurethane dispersion is 0.1 to 1 mmol/g, preferably 0.2 to 0.5 mmol/g, based on the total solids content of the dispersion.

The polyurethane dispersion preferably contains at least one protonated volatile tertiary amine. The latter acts as counterion to the anionic groups.

Upon application of the dispersion, the volatile tertiary amine evaporates from the dispersion, thereby allowing the anionic groups to lose their charge which reduces hydrophilicity of the cured film, and allows the pH of the applied dispersion to drop to a value < 7, which triggers the crosslinking reaction with a polyhydrazide crosslinker.

A preferred protonated volatile tertiary amine is protonated triethyl amine.

The polyurethane dispersion preferably contains urethane and urea groups derived from at least one diisocyanate, particularly with aliphatic isocyanate groups. Suitable diisocyanates are the isomeric diphenylmethane diisocyanates (MDI), the isomeric toluene diisocyanates (TDI), 1 ,6-hexane diisocyanate (HDI), 2,2(4),4-trimethyl-1 ,6-hexane diisocyanate (TMDI), or preferably cycloaliphatic diisocyanates. Preferred are cycloaliphatic diisocyanates, particularly selected from 1,3-cyclohexanediisocyanate, 1,4-cyclohexanediisocyanate, 1-methyl-2,4(6)-diisocyanatocyclohexane (H₆TDI), isophorone diisocyanate (IPDI), bis(4-isocyanatocyclohexyl)methane (H₁₂MDI), 1,3-bis(isocyanatomethyl)cyclohexane, 1,4-bis(isocyanatomethyl)cyclohexane, m-xylylene diisocyanate and p-xylylene diisocyanate. Preferred thereof is IPDI or H₁₂MDI, whereby IPDI enables a particularly high elongation and H₁₂MDI enables a particularly high hardness. Particularly preferred is IPDI.

In a preferred embodiment of the invention, the polyurethane dispersion contains at least one solvent, preferably with a boiling point at atmospheric pressure of 120 to 250 °C, preferably 145 to 230 °C, preferably in an amount of 1 to 15 weight-%, more preferably 2 to 8 weight-%, based on the total dispersion.

Such a solvent can help in the preparation process of the dispersion and also acts as coalescing aid, helping the dispersed polyurethane particles to coalesce and form a homogeneous cured film upon application of the dispersion.

Preferably, the solvent is selected from the group consisting of diethylene glycol dimethylether, diethylene glycol diethylether, diethylene glycol di-n-butylether, dipropylene glycol dimethylether, propylene glycol diacetate, butylene glycol diacetate, propylene glycol methylether acetate, dipropylene glycol methylether acetate, 2,2,4-trimethyl-1,3-pentanediol monoisobutyrate, 2,5,7,10-tetraoxaundecane, 4,8-dimethyl-2,5,7,10-tetraoxaundecane, ethyl levulinate, butyl levulinate, levulinate propanediol ketal, N-methyl-pyrrolidone, N-ethyl-pyrrolidone, N-butyl-pyrrolidone, dihydrolevoglucosenone, dimethylsulfoxide, 3-methoxy-N,N-dimethyl-propanamide and 3-n-butoxy-N,N-dimethylpropanamide.

Particularly preferred thereof is dipropylene glycol dimethylether. This solvent is of low toxicity, low odour, easily available, shows good solving and diluting properties and is a good coalescing aid.

The polyurethane dispersion preferably has a solids content in relation to the total polyurethane dispersion of 20 to 60 weight-%, more preferably 25 to 50 weight-%, particularly 30 to 45 weight-%. The solids content can be determined by a calculation, whereby the volatile contents including water, volatile tertiary amine and solvent are counted off, or it can be determined by scale, whereby a spread out portion of the dispersion is being dried to a constant weight in an oven or with an infrared heater.

The polyurethane dispersion is preferably obtained from a process using a building block from the reaction of at least one mercapto group-containing diol and at least one ketone of the formula (II), 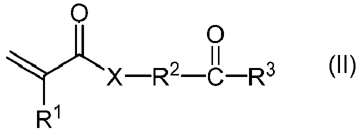 whereby R¹, R², R³ and X have the meanings already mentioned.

A preferred mercapto group-containing diol is 1,4-dithioerythritol or 3-mercapto-1,2-propanediol. Particularly preferred is 3-mercapto-1,2-propanediol.

The mercapto group of the mercapto group-containing diol is able to undergo an addition reaction to the activated double bond of the ketone of the formula (II), whereby a ketone-functional building block with two hydroxyl groups is formed.

A particularly preferred process to obtain the waterbased anionic polyurethane dispersion with incorporated ketone groups comprises the steps of
a) reacting at least one carboxy group-containing diol, at least one polyol with a mean hydroxyl number of 28 to 225 mg KOH/g, preferably 35 to 112 mg KOH/g, at least one diisocyanate, at least one mercapto group-containing diol and at least one ketone of the formula (II) in a molar NCO/OH ratio of 1.6 to 2.5, preferably 1.7 to 2.2, optionally in the presence of at least one solvent, to obtain an isocyanate-functional polymer with incorporated carboxy and ketone groups,
b) neutralizing the obtained isocyanate-functional polymer by the addition of at least one volatile tertiary amine, preferably in a molar ratio of tertiary amine to carboxy groups of 0.5 to 1.5, preferably 0.8 to 1.2,
c) dispersing the neutralized isocyanate-functional polymer in water,
d) immediately followed by reacting the remaining isocyanate groups by the addition of at least one diamine with primary or secondary amine groups.

A preferred carboxy group-containing diol is 2,2-bis(hydroxymethyl)propionic acid (2,2-dimethylolpropionic acid, DMPA) or 2,2-bis(hydroxymethyl)butanoic acid (2,2-dimethylolbutanonic acid, DMBA). Particularly preferred is DMPA.

A preferred polyol with a mean hydroxyl number of 28 to 225 mg KOH/g, preferably 35 to 112 mg KOH/g, is selected from the group consisting of polyether polyols, polyester polyols, polycarbonate polyols, poly(meth)acrylate polyols, polyhydrocarbon polyols and polyhydroxy-functional acrylonitrile/butadiene copolymers. Preferred polyols are diols or triols, particularly preferred are diols.

Preferred polyether polyols contain repeating units selected from oxyethylene, oxy-1,2-propylene, oxy-1,3-propylene, oxy-1,4-butylene, oxy-1,2-butylene and mixtures thereof, whereby the content of oxyethylene units is preferably less than 20 weight-%.

Particularly preferred are poly(oxy-1,2-propylene) diols, poly(oxy-1,3-propylene) diols or poly(oxy-1,4-butylene) diols. Most preferred are poly(oxy-1,4-butylene) diols, also called polytetrahydrofurane diols. Such a polyol enables a particularly high elongation at high water resistance.

Preferred polyester polyols are saturated polyester polyols, preferably derived from the esterification of ε-caprolactam or from the esterification of at least one diol such as 1,2-ethane diol, diethylene glycol, 1,2-propane diol, dipropylene glycol, 1,4-butane diol, 1,5-pentane diol, 1,6-hexane diol, neopentyl glycol or 1,4-cyclohexane diol, with at least one diacid such as succinic acid, glutaric acid, adipic acid, suberic acid, sebacic acid, 1,12-dodecanedioic acid, hexahydrophthalic acid or hexahydroterephthalic acid. Particularly preferred are polyester diols derived from 1,6-hexane diol or neopentyl glycol and adipic acid, sebacic acid or 1,12-dodecanedioic acid. Such a polyol enables a particularly high hardness and strength.

Preferred polycarbonate polyols are derived from the esterification of at least one diol such as the ones already mentioned for the preparation of polyester diols, with at least one dialkyl or diaryl carbonate.

Preferred polyhydrocarbon polyols are polyhydroxy-functional fats or oils, particularly natural fats or oils, or polyols obtained by a chemical modification of natural fats or oils.

Particularly preferred are polyether polyols, polyester polyols or polycarbonate polyols, most preferred are polyether polyols.

Suitable diisocyanates are the isomeric diphenylmethane diisocyanates (MDI), the isomeric toluene diisocyanates (TDI), 1,6-hexane diisocyanate (HDI), 2,2(4),4-trimethyl-1,6-hexane diisocyanate (TMDI), or preferably cycloaliphatic diisocyanates, particularly 1,3-cyclohexanediisocyanate, 1,4-cyclohexanediisocyanate, 1-methyl-2,4(6)-diisocyanatocyclohexane (H₆TDI), isophorone diisocyanate (IPDI), bis(4-isocyanatocyclohexyl)methane (H₁₂MDI), 1,3-bis(isocyanatomethyl)cyclohexane, 1,4-bis(isocyanatomethyl)cyclohexane, m-xylylene diisocyanate or p-xylylene diisocyanate. Particularly preferred is IPDI or H₁₂MDI, most preferred is IPDI.

Step a) is preferably done at a temperature of 40 to 120 °C, preferably 60 to 100 °C, preferably in the presence of a suitable catalyst such as dibutyltin dilaurate, stannous octoate or the like.

In step a), the mercapto group-containing diol and the ketone of the formula (II) can individually be added in any order.

In a preferred process, the mercapto group-containing diol is reacted with the polyisocyanate before the ketone of the formula (II) is added, preferably in the presence of the carboxy group-containing diol and the diol with a mean hydroxyl number of 28 to 112 mg KOH/g. Thereby the two hydroxyl groups of the mercapto group-containing diol are reacted with isocyanate groups and the mercapto group remains mostly free, being able to undergo the addition reaction to the double bond of the ketone of the formula (II) upon addition thereof.

In a further preferred process, the mercapto group-containing diol, the ketone of the formula (II) and the polyisocyanate are reacted simultaneously, preferably in the presence of the carboxy group-containing diol and the diol with a mean hydroxyl number of 28 to 112 mg KOH/g. In this case, the adduct of the mercapto group-containing diol and the ketone of the formula (II) is fomed in situ, simultaneously to the reaction between the hydroxyl groups with isocyanate groups.

In a further preferred process, the mercapto group-containing diol and the ketone of the formula (II) are added in step a) in the form of a pre-reacted adduct containing ketone groups of the formula (I). Such a pre-reacted adduct is preferably prepared at a temperature of 20 to 80 °C, preferably 30 to 60 °C, in a molar ratio between the mercapto groups and the ketone of the formula (II) of 2/1 to 1/2, preferably 1.5/1 to 1/1.5, more preferably 1.2/1 to 1/1.2, optionally in the presence of a suitable catalyst such as a tertiary amine. The obtained adduct is low viscous with easy handling properties.

In the case of 3-mercapto-1,2-propanediol as mercapto group-containing diol, the adduct typically contains molecules of the formula (Illa), and in the case of 1,4-dithioerythritol, the adduct typically contains molecules of the formula (IIIb), 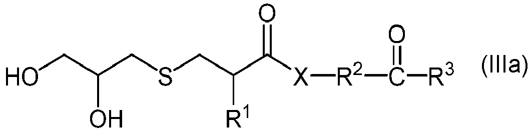 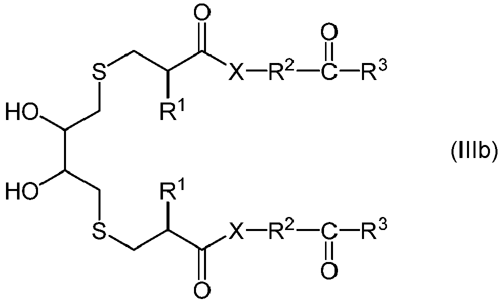 whereby R¹, R², R³ and X have the already mentioned meanings.

Step a) is finished when most of the hydroxyl groups have reacted and the NCO-content of the reaction mixture has dropped to a constant value.

Step a) is preferably performed in the presence of at least one solvent, preferably a solvent with a boiling point in the range of 120 to 250 °C, preferably 145 to 230 °C, particularly the already mentioned ones. Such a solvent is preferably not removed from the dispersion after the process. The presence of a solvent helps to dissolve a carboxy group-containing diol such as DMPA and helps in the dispersion step c) by lowering the viscosity of the neutralized polymer.

Preferably, the solvent content in the isocyanate-functional polymer at the end of step a) is 0 to 30 weight-%, preferably 5 to 15 weight-%, based on the total weight of the isocyanate-functional polymer and solvent.

The obtained reaction product of step a) may be cooled down to room temperature and stored in a suitable moisture tight container, where it is storage stable for several weeks or months. However, it is also possible to perform step b) and c) right after step a).

A preferred volatile tertiary amine for step b) is trimethylamine, triethylamine or triisopropylamine, particularly triethylamine.

Step b) is preferably done at a temperature of 10 to 100 °C, preferably 15 to 80 °C.

Step c) is preferably performed by mixing the neutralized polymer and water under vigorous stirring, whereby the water preferably has a temperature of 0 to 30 °C, preferably 4 to 25 °C, and the neutralized polymer preferably has a temperature of 20 to 100 °C, preferably 35 to 80 °C. In a batch process, the neutralized polymer can be added to the water, or vice versa. Preferably, the neutralized polymer is added to the water. Also preferred is a continuous process for step c) and d).

Step d) is performed right after step c) to ensure that the isocyanate groups are only in contact with water for a limited time. Preferably, the diamine is added in a water diluted form, which means a small portion of the total water in the process is used to dilute the diamine in step d). This ensures a rapid distribution of the diamine in the reaction mixture and a uniform chain extention of the polymer.

A preferred diamine in step d) is hydrazine, 1,2-ethane diamine, 1,2-propane diamine, 1,3-propane diamine, N-methyl-1,3-propane diamine, 1,4-butane diamine, 1,5-pentane diamine, 2,2-dimethyl-1,3-propane diamine, 2-methyl-1,5-pentane diamine, 1,6-hexane diamine, 2,2(4),4-trimethyl-1,6-hexane diamine, isophorone diamine, 1,2-diaminocyclohexane, 1,3-diaminocyclohexane, 1,4-diaminocyclohexane, 1,3-bis(aminomethyl)cyclohexane, 1,3-bis(aminomethyl)-benzene, bis(4-aminocyclohexyl)methane, N-(2-aminoethyl)ethanolamine, bis(2-aminoethyl)ether, 3,6-dioxaoctane 1,8-diamine, 4,7-dioxadecane 1,10-diamine, 4,9-dioxadodecane 1,12-diamine or a polyoxypropylene diamine with an average molecular weight Mₙ of 200 to 500 g/mol, commercially available e.g. as Jeffamine^{®} D-230 or Jeffamine^{®} D-400 (both from Huntsman).

Preferred thereof are diamines free of ether groups with up to 6 carbon atoms, particularly hydrazine or 1,2-ethane diamine. Most preferred is 1,2-ethane diamine.

The diamine in step d) is preferably used in a molar ratio of amine groups (primary or secondary) to isocyanate groups in the range of 0.5 to 1.1, preferably 0.7 to 1, more preferably 0.9 to 1.

After chain extention in step d), a further step of removal of an optionally present solvent may be done to some extent, preferably by a distillation process. This is preferred in the case of a highly volatile solvent such as methyl ethyl ketone used during the process.

The total amount of water in the process is such, that the target solids content is finally achieved.

The described waterbased anionic polyurethane dispersion with incorporated ketone groups of the formula (I) enables the self-crosslinking of the polyurethane dispersion upon cure in combination with an added polyhydrazide crosslinker, whereby the polyurethane dispersion with the added polyhydrazide crosslinker is still storage stable. Only upon use, when the volatile compounds including the volatile tertiary amine evaporate from the applied dispersion, the pH drops below 7, which triggers the reaction between the incorporated ketone groups of the formula (I) and the polyhydrazide crosslinker. This self-crosslinking mechanism enables a particularly high hardness, scratch resistance and improved wet abrasion properties of the resulting cured film.

Another subject of the invention is a self-crosslinking composition containing the described waterbased anionic polyurethane dispersion with incorporated ketone groups of the formula (I) and at least one polyhydrazide crosslinker.

The polyhydrazide crosslinker typically contains hydrazide groups of the formula

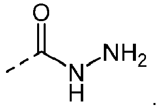

A preferred polyhydrazide crosslinker is an organic dicarboxylic acid dihydrazide. Such a dihydrazide can be prepared by the reaction of an organic dicarboxylic acid with hydrazine in a ratio of at least two moles of hydrazine per mole of organic dicarboxylic acid.

Preferred organic dicarboxylic acid dihydrazides are the dihydrazides of an organic dicarboxylic acid with 2 to 18 carbon atoms, particularly selected from the group consisting of oxalic acid, malonic acid, succinic acid, glutaric acid, adipic acid, 1,7-heptanedioic acid, 1,8-octanedioic acid, azelaic acid, sebacic acid, 1,12-dodecanedioic acid, 1,13-tridecanedioic acid, 1,16-hexadecanedioic acid, 1,18-octadecanedioic acid, 1,4-cyclohexanedioic acid, terephthalic acid, 1,4-furane dicarboxylic acid, maleic acid, fumaric acid, tartaric acid and malic acid.

Preferred thereof are the dihydrazides of succinic acid, adipic acid, azelaic acid, sebacic acid, 1,12-dodecanedioic acid, 1,4-cyclohexanedioic acid, terephthalic acid, 1,4-furane dicarboxylic acid, maleic acid or fumaric acid.

Particularly preferred is adipic acid dihydrazide, also called adipic dihydrazide.

The preferred polyhydrazide crosslinkers are easily available, enable crosslinking with good reactivity and cured films of high quality.

The self-crosslinking composition preferably contains such an amount of polyhydrazide crosslinker, that the molar ratio of hydrazide groups to ketone groups in the composition is 0.3 to 1.2, preferably 0.5 to 1.1, more preferably 0.7 to 1.

The self-crosslinking composition preferably contains at least one further ingredient selected from defoamers, surfactants, matting agents, coalescing agents, solvents, pigments and fillers.

Suitable defoamers are known commercially available defoamers suitable for waterbased compositions, for example available from Byk. A typical amount of defoamer based on the total composition is 0.01 to 5 weight-%, preferably 0.02 to 2 weight-%.

Suitable matting agents are known commercially available matting agents for waterbased compositions. They allow a non-glossy look of the cured composition, which is sometimes preferred.

Preferred solvents are the solvents already mentioned. Such solvents also act as coalescing agent.

Preferred pigments are titanium dioxides, iron oxides or organic pigments.

Suitable fillers are particularly ground or precipitated calcium carbonates (chalk), which are optionally surface coated with a fatty acid such as stearate, barium sulfate (barytes), slate, silicates (quartz), magnesiosilicates (talc), alumosilicates (clay, kaolin), dolomite, mica, glass bubbles, silicic acid, particularly highly dispersed silicic acids from pyrolytic processes (fumed silica), carbon black, graphite, microspheres, calcium oxide, calcium hydroxide, aluminium oxide, aluminium hydroxide, magnesium oxide, magnesium hydroxide or zinc oxide.

The self-crosslinking composition may contain further ingredients, particularly
- further polymeric dispersions, particularly acrylic dispersions,
- adhesion promoters, particularly organoalkoxy silanes, oligomeric silanes or titanates,
- fibres, particularly glass fibres, carbon fibres, metallic fibres, ceramic fibres, plastic fibres, particularly polyamide fibres or polyethylene fibres, or natural fibres such as wool, cellulose, hemp or sisal,
- nanofibres such as graphene or carbon nanotubes,
- dyes,
- plasticizers, particularly phthalates, particularly diisononyl phthalate or diisodecyl phthalate, hydrogenated phthalates, terephthalates, hydrogenated terephthalates, trimellitates, adipates, azelates, sebacates, citrates, benzoates, glycol ethers, glycol esters such as triethylene glycol bis(2-ethylhexanoate), polyether polyols, organic sulfonates or phosphates, particularly diphenylcresyl phosphate or tris(2-ethylhexyl) phosphate, polybutenes, polyisobutenes or plasticizers obtained from natual fats or oils such as epoxidized soy or linseed oil,
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes,
- further additives such as flow enhancers, leveling agents, deaerating agents, biocides, antioxidants or stabilizers against UV or heat.

The applied composition cures by evaporation of the volatile ingredients at ambient conditions, preferably 5 to 50 °C, particularly 10 to 30 °C, and 10 to 95 % relative humidity, particularly 20 to 80 % relative humidity. The main volatile ingredients are water, tertiary amine and optionally solvent.

Upon curing, the polymer particles form a film by coalescence and a further crosslinking by the keton-hydrazide-reaction, also called self-crosslinking.

The self-crosslinking starts upon evaporation of the volatile tertiary amine, whereby the pH value in the composition drops and the polyhydrazide crosslinker can react with the incorporated ketone groups, typically to form bonds or the formula 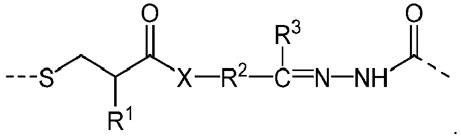 This additional crosslinking, also called self-crosslinking, enables a better performance of the cured composition, particularly in terms of hardness, scratch resistance, stain resistance and water resistance.

Preferably, the self-crosslinking composition is used as a one-component coating, adhesive or sealant, particularly as a coating.

When used as a coating, the self-crosslinking composition preferably has a liquid consistency with good flowing properties. Such a composition is preferably applied by a brush, a roller or a spray equipment onto a substrate, preferably a floor. The solids content is thereby preferably 10 to 60 weight-%, preferably 20 to 50 weight-%, based on the total composition.

When used as adhesive or sealant, the self crosslinking composition may have a liquid or a paste-like consistency. A paste-like composition may contain high amounts of fillers in the range of 10 to 80 weight-%, preferably 20 to 70 weight-%, based on the total composition. Such a composition preferably has a solids content of 20 to 90 weight-%, preferably 30 to 80 weight-%, based on the total composition. A composition with a paste-like consistency is preferably applied by a cartridge, a tube or a spatula.

The self-crosslinking composition is typically applied onto at least one substrate. Suitable substrates are particularly
- glass, glass ceramics, concrete, mortar, cement screed, fiber cement, brick, plaster or natural stone such as granite or marble,
- repair or leveling compounds based on PCC (polymer-modified cement mortar) or ECC (epoxy-modified cement mortar),
- metals or alloys such as aluminium, iron, steel, copper or other non-ferrous metals, including surface treated metals such as galvanized or chrome-plated metals,
- asphalt or bitumen,
- leather, textiles, paper, wood, wood-composits or textile-composits bonded with phenolic resins, melamine resins or epoxy resins or other polymer-composites,
- plastics such as hard or soft PVC, polycarbonate, polystyrene, polyester, polyamide, PMMA, ABS, SAN, epoxy resins, phenolic resins, PUR, POM, TPO, PE, PP, EPM or EPDM, each untreated or surface-treated, for example by plasma, corona or flame,
- fiber-reinforced plastics such as carbon fiber reinforced plastics, glass fiber reinforced plastics, natural fiber reinforced plastics or sheet moulding compounds,
- insulating foams, in particular made of EPS, XPS, PUR, PIR, rock wool, glass wool, aerogel or foam glass,
- coated or painted substrates, such as painted concrete, powder-coated metals or painted sheet metals, or
- coatings, paints or varnishes.

The substrates are optionally surface treated before the self-crosslinking composition is applied, particularly by a physical or chemical cleaning process and/or by the application of a primer or an activator.

Preferred is the use of the self-crosslinking composition as coating, particularly for the sealing of floors or as topcoat in a floor coating system, allowing easy to use high quality coatings of low toxicity and low emission.

Particularly preferred is the use as clear coat. For this use, the self-crosslinking composition contains preferably no or only a small amount of pigments and fillers, preferably less than 10 weight-%, more preferably less than 5 weight-%, particularly less than 1 weight-% of pigments and fillers based on the total composition.

Another subject of the invention is a method of coating comprising the steps of
i) applying the self-crosslinking composition containing the described waterbased anionic polyurethane dispersion with incorporated ketone groups of the formula (I) in an amount of 0.02 to 2 kg/m², preferably 0.03 to 1 kg/m², more preferably 0.05 to 0.5 kg/m², onto a substrate, followed by
ii) curing the applied self-crosslinking composition at ambient conditions, at least partly by evaporation of the volatile contents.

The coating is preferably applied onto a floor, a roof or a wall.

Preferred is the use on a floor, preferably a floor inside a building.

The coating has a high hardness at high elongation, a high scratch resistance, a good stain resistance and a high water resistance (low wet abrasion properties).

### Examples

The following examples illustrate the present invention without being limitative. "Standard climate" means a temperature of 23±1°C and a relative atmospheric moisture of 50±5%.

"pbw" means "parts by weight".

### Preparation of neutralized isocyanate-functional polymers:

### Polymer-1:

101.5 pbw of dipropylene glycol dimethylether (Proglyde^{®} DMM, from Dow), 40.0 pbw of 2,2-dihydroxymethylpropionic acid (DMPA) and 490.0 pbw of a poly(oxy-1,4-butylene) diol with OH-number 56 mg KOH/g (PolyTHF^{®} 2000, from BASF) were placed in a round bottom flask under nitrogen atmosphere and heated under good stirring to 60 °C. Then, 308.7 pbw of isophorone diisocyanate (Vestanat^{®} IPDI, from Evonik) and 0.6 pbw dibutyltin dilaurate were added and the mixture was heated to 90 °C for 3 hours under constant stirring. The reaction mixture was then cooled to 70 °C and 22.4 pbw of 3-mercapto-1,2-propanediol (thioglycerol) were added. After 30 min at 70 °C, 36.8 pbw of N-(1,1-dimethyl-3-oxobutyl)acrylamide (diacetone acrylamide, DAAM) were added, the reaction mixture was heated to 90 °C and held for one hour. The final NCO-content was 5.6 weight-%. The so obtained isocyanate-functional polymer was then cooled down to 75 °C and 30.2 pbw of triethylamine were added under good stirring, thereby neutralizing the carboxy groups to become anionic.

### Polymer-2:

101.5 pbw of dipropylene glycol dimethylether (Proglyde^{®} DMM, from Dow), 40.0 pbw of 2,2-dihydroxymethylpropionic acid (DMPA) and 470.1 pbw of a poly(oxy-1,4-butylene) diol with OH-number 56 mg KOH/g (PolyTHF^{®} 2000, from BASF) were placed in a round bottom flask under nitrogen atmosphere and heated under good stirring to 60 °C. Then, 298.4 pbw of isophorone diisocyanate (Vestanat^{®} IPDI, from Evonik) were added and the mixture was heated to 80 °C for one hour under constant stirring, followed by the addition of 60.0 pbw of the **Ketone-Adduct-1,** prepared as given below, and 0.6 pbw dibutyltin dilaurate. The reaction mixture was then held at 90 °C for 3 hours. The final NCO-content was 5.2 weight-%. The so obtained isocyanate-functional polymer was then cooled down to 75 °C and 30.2 pbw of triethylamine were added under good stirring, thereby neutralizing the carboxy groups to become anionic.

### Polymer-3:

The **Polymer-3** was prepared in the same way as the **Polymer-2,** whereby 16.2 pbw of 1,2-propanediol were added instead of the 60.0 pbw of the **Ketone-Adduct-1**.

The **Ketone-Adduct-1** was prepared by the reaction of 201.6 g (1.86 mol) 3-mercapto-1,2-propanediol (thioglycerol) with 321.5 g (1.90 mol) of N-(1,1-dimethyl-3-oxobutyl)acrylamide (diacetone acrylamide, DAAM) in the presence of 9 g triethylamine for one hour at 40 °C. Obtained was a transparent fluid with a viscosity at 20 °C of 18'880 cPoise containing ketone and hydroxyl functionalities.

### Preparation of Polyurethane Dispersions:

### PUD-P1:

592.9 pbw of water were placed in a round bottom flask at a temperature of 15 °C. Then 342.0 pbw of the neutralized isocyanate-functional **Polymer-1,** prepared as described above, was added with a temperature of 75 °C under good stirring, whereby a milky dispersion was formed, immediately followed by the addition of a solution of 13.0 pbw of 1,2-ethane diamine in 52.1 pbw of water under maintained good stirring.

The obtained anionic polyurethane dispersion was a milky white fluid with a solids content of approx. 31 weight-%.

### PUD-P2:

The dispersion **PUD-P2** was prepared in the same way as dispersion **PUD-P1,** whereby **Polymer-2** was used instead of **Polymer-1.**

The obtained anionic polyurethane dispersion was a milky white fluid with a solids content of approx. 32 weight-%.

### PUD-P3 (Reference):

The dispersion **PUD-P3** was prepared in the same way as dispersion **PUD-P1,** whereby **Polymer-3** was used instead of **Polymer-1.**

The obtained anionic polyurethane dispersion was a milky white fluid with a solids content of approx. 32 weight-%.

The polyurethane dispersions **PUD-P1** and **PUD-P2** are dispersions with incorporated ketone groups of the formula (I) according to the invention. The polyurethane dispersion **PUD-P3 (Reference)** is a reference example without ketone groups.

### Waterbased Self-Crosslinking Compositions:

The ingredients of each composition **C-1** to **C-4** as given in Table 1 in the given amounts (parts by weight) were thoroughly mixed by a propeller stirrer and stored in a sealed container.

The compositions **C-2** and **C-3** are self-crosslinking compositions according to the invention. Composition **C-1 (Ref.)** contains a dispersion with incorporated ketone groups but no polyhydrazide crosslinker; it is not self-crosslinking. Composition **C-4 (Ref.)** is a reference example wherein the polyurethane dispersion is free of ketone groups.

The aspect of each composition (composition aspect) was visually judged by stirring the composition with a spatula and letting it flow from the spatula to check for lumps or other inhomogeneities. The rating "milky fluid" also indicates that there were no inhomogeneities visible.

Each composition was applied as coating onto an aluminium panel in a wet film thickness of 100 µm (resulting in a dry film thickness of approx. 32 µm). Each film was then stored in standard climate and measured for Persoz hardness (pendulum hardness) according to ASTM D4366 after 1d, 4 d and 7d curing time.

The film aspect was visually judged from the film prepared for Persoz hardness determination after a curing time of 7 d in standard climate.

The scratch resistance was determined according to ISO 19252 with a given load on a coated aluminium panel, which was prepared in the same way as described for Persoz hardness with a curing time of 4 d in standard climate. The results in Table 1 indicate the maximum load at which no scratch/damage occurred. A high load indicates a good scratch resistance.

The gloss at 60° was determined according to ISO 2813 with a TQC Sheen Gloss-meter at 60° on a Byko-Chart Opacity Display 5C, coated with a wet film thickness of 100 µm (resulting in a dry film thickness of approx. 32 µm) after a curing time of 7 d in standard climate.

The wet abrasion was determined on a coated aluminium panel in a wet film thickness of 100 µm (resulting in a dry film thickness of approx. 32 µm) after a curing time of 7 d in standard climate, brushed with a detergent water solution, using an Elcometer 1720 Abrasion tester at a speed of 37 cycles/min. The mass loss after 200 cycles was determined and is indicated in Table 1. A low weight loss indicates a high water resistance.

The storage stability of the composition was determined after 2 months storage of the freshly prepared composition in a sealed container at standard climate followed by judging the aspect of the composition and determination of Persoz hardness as described before. If no relevant differences from the results of the freshly prepared composition occurred, storage stability was rated as "good".

The mechanical properties (Young's modulus, tensile strength and elongation at break) were determined according to ISO 527-2 at a crosshead speed of 120 mm/min with dumbbell-shaped samples 5A in a layer thickness of 0.45 mm after a curing time of 7 d in standard climate.

The stain resistance properties were determined on a Byko-Chart Opacity Display 5C, coated in a wet film thickness of 100 µm (resulting in a dry film thickness of approx. 32 µm) after a curing time of 7 d in standard climate, by dropping 3 drops of each medium given in Table 1 onto the cured film, covering the spot for 24 hours without touching it, followed by wiping off the spot, cleaning the spotted area with detergent water and wiping it dried. Thereafter, the film was judged for permanent marks with the following rating: 0 = untouched film, 1 = light staining, 2 = heavy staining, 3 = light cracking.

The compositions named with **(Ref.)** are reference examples.

The results are given in Table 1.

**Table 1: composition and properties of C-1 to C-4. "wt." means "weight" "n.d." means "not determined" "IPA" means "isopropyl alcohol"**

| **Composition:** | | | **C-1 (Ref.)** | **C-2** | **C-3** | **C-4 (Ref.)** |
|---|---|---|---|---|---|---|
| **PUD-P1** | | | 100 | 99.4 | - | - |
| **PUD-P2** | | | - | - | 99.4 | - |
| **PUD-P3 (Reference)** | | | - | - | - | 99.4 |
| adipic dihydrazide (ADH) | | | - | 0.6 | 0.6 | 0.6 |
| defoamer (Byk 012) | | | 0.05 | 0.05 | 0.05 | 0.05 |
| composition aspect | | | milky fluid | milky fluid | milky fluid | milky fluid |

| Persoz hardness [s] | | | | | | |
|---|---|---|---|---|---|---|
| | 1d | | 122 | 140 | 137 | 127 |
| | 4d | | 125 | 160 | 150 | 133 |
| | 7d | | 127 | 162 | 150 | 133 |
| film aspect | | | clear | clear | clear | turbid |
| scratch resistance (4d) | | | 1.1 kg | > 2 kg | > 2 kg | 1.6 kg |
| gloss at 60° [GU] | | | 89 | 91 | 88 | 48 |
| wet abrasion [mg] | | | n.d. | n.d. | 68 | 191 |
| storage stability | | | good | good | good | good |

| **mechanical properties:** | | | | | | |
|---|---|---|---|---|---|---|
| Young's modulus [MPa] | | | 471 | 1093 | 402 | 267 |
| tensile strength [MPa] | | | 14.6 | 12.3 | 32.3 | 31.9 |
| elongation [%] | | | 79 | 121 | 374 | 457 |

| **stain resistance:** | | | | | | |
|---|---|---|---|---|---|---|
| | 10% NaOH in water | | 1 | 1 | 1 | 2 |
| | acetone/water 1:1 in wt. | | 2 | 1 | 1 | 2 |
| | IPA/water 1:1 in wt. | | 3 | 2 | 1 | 3 |
| | tea | | 1 | 0 | 1 | 2 |
| | tap water | | 1 | 1 | 1 | 2 |

Table 1 shows that the inventive self-crosslinking compsitions **C-2** and **C-3** were storage stable and showed an improved Persoz hardness, scratch resistance and stain resistance compared to the composition **C-1 (Ref.)** without polyhydrazide crosslinker and to the composition **C-4 (Ref.)** without incorporated ketone groups.

Comparison of **C-1 (Ref.)** and **C-2** shows the big impact of the polyhydrazide crosslinker on the Young's modulus, which indicates a high hardness under mechanical stress. Comparison of **C-3** and **C-4 (Ref.)** shows the improvemend wet abrasion properties of **C-3,** indicating an improved water resistance.

## Claims

1. Waterbased anionic polyurethane dispersion with incorporated ketone groups of the formula (I) 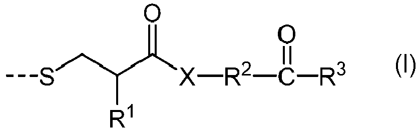 wherein
R¹ is H or methyl,
R² is a divalent C₄ to C₇ alkylene group,
R³ is a C₁ to C₄ alkyl, and
X is O, S or NR⁴ with R⁴ = H or a C₁ to C₆ alkyl.

2. The polyurethane dispersion according to claim 1, wherein R¹ is H, R² is 2-methyl-2,3-propanediyl, R³ is methyl and X is NH.

3. The polyurethane dispersion according to any of claims 1 or 2, wherein the content of ketone groups based on the total solids content of the dispersion is 0.05 to 2 mmol/g, preferably 0.1 to 1 mmol/g, more preferably 0.1 to 0.5 mmol/g.

4. The polyurethane dispersion according to any of claims 1 to 3, wherein the dispersion contains at least one protonated volatile tertiary amine.

5. Process to obtain the polyurethane dispersion according to any of claims 1 to 4 using a building block from the reaction of at least one mercapto group-containing diol and at least one ketone of the formula (II).

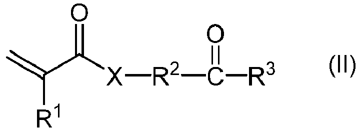

6. The process according to claim 5, wherein the mercapto group-containing diol is 1,4-dithioerythritol or 3-mercapto-1,2-propanediol, preferably 3-mercapto-1,2-propanediol.

7. Process according to any of claim 5 or 6 comprising the steps of
a) reacting at least one carboxy group-containing diol, at least one polyol with a mean hydroxyl number of 28 to 225 mg KOH/g, preferably 35 to 112 mg KOH/g, at least one diisocyanate, at least one mercapto group-containing diol and at least one ketone of the formula (II), in a molar NCO/OH ratio of 1.6 to 2.5, preferably 1.7 to 2.2, optionally in the presence of at least one solvent, to obtain an isocyanate-functional polymer with incorporated carboxy and ketone groups,
b) neutralizing the obtained isocyanate-functional polymer by the addition of at least one volatile tertiary amine,
c) dispersing the neutralized isocyanate-functional polymer in water,
d) immediately followed by reacting the remaining isocyanate groups by the addition of at least one diamine with primary or secondary amine groups.

8. The process according to claim 7, wherein the polyol with a mean hydroxyl number of 28 to 225 mg KOH/g, preferably 35 to 112 mg KOH/g, is selected from the group consisting of polyether polyols, polyester polyols, polycarbonate polyols, poly(meth)acrylate polyols, polyhydrocarbon polyols and polyhydroxy-functional acrylonitrile/butadiene copolymers.

9. The process according to claim 7 or 8, wherein the mercapto group-containing diol is reacted with the polyisocyanate before the ketone of the formula (II) is added.

10. The process according to claim 7 or 8, wherein the mercapto group-containing diol, the ketone of the formula (II) and the polyisocyanate are reacted simultaneously.

11. The process according to claim 7 or 8, wherein the mercapto group-containing diol and the ketone of the formula (II) are added in step a) in the form of a pre-reacted adduct containing ketone groups of the formula (I).

12. Self-crosslinking composition containing the polyurethane dispersion according to any of claims 1 to 4 and at least one polyhydrazide crosslinker, preferably an organic dicarboxylic acid dihydrazide.

13. Self-crosslinking composition according to claim 12, wherein at least one further ingredient selected from defoamers, surfactants, matting agents, coalescing agents, solvents, biocides, pigments and fillers is contained.

14. Use of the self-crosslinking composition according to any of claim 12 or 13 as one-component coating, adhesive or sealant, particularly as coating.

15. Method of coating comprising the steps of
i) applying the self-crosslinking composition according to claim 12 or 13 in an amount of 0.02 to 2 kg/m², preferably 0.05 to 1 kg/m², more preferably 0.05 to 0.5 kg/m², onto a substrate, followed by
ii) curing the applied self-crosslinking composition at ambient conditions, at least partly by evaporation of the volatile contents.
